# EUROPEAN PATENT APPLICATION

(11) **EP 4 749 735 A1**
(43) Date of publication of application: **27.05.2026**
(21) Application number: 25213469.7
(22) Date of filing: 04.11.2025
(51) Int. Cl.: H01M 10/04, H01M 10/052

(54) **TAPE ATTACHMENT DEVICE FOR SECONDARY BATTERY AND TAPE ATTACHMENT METHOD USING THE SAME**

(30) Priority: 26.11.2024 KR 20240171244
(71) Applicant: SAMSUNG SDI CO., LTD., Yongin-si, Gyeonggi-do 17084 (KR)
(72) Inventor: PARK, Myung Hyun, Yongin-si, Gyeonggi-do 17084 (KR); KWON, Soo Bin, Suwon-si, Gyeonggi-do 16678 (KR)
(74) Representative: Marks & Clerk LLP

(57) **Abstract**

The present disclosure relates to a tape attachment device for a secondary battery and a tape attachment method using the same and provides a tape attachment device for a secondary battery which includes a first attachment roller disposed in a direction substantially parallel to a first direction and a second attachment roller disposed in a direction substantially parallel to a second direction intersecting the first direction, wherein the first attachment roller and the second attachment roller bring tape into close contact with a secondary battery while moving in a direction substantially parallel to a third direction intersecting the first direction and the second direction.

## Description

### FIELD

The present disclosure relates to a tape attachment device for a secondary battery and a tape attachment method using the same.

### BACKGROUND

In general, the demand for secondary batteries with high energy density and capacity has recently dramatically increased according to the rapid supply of electronic apparatuses using batteries, such as portable phones, notebook computers, and electric vehicles. Accordingly, research and development for improving performance of lithium secondary batteries is actively being conducted.

A lithium secondary battery is a battery which includes a positive electrode and a negative electrode including an active material capable of intercalation and deintercalation of lithium ions and an electrolyte and produces electric energy through oxidation and reduction reactions when lithium ions are intercalated/deintercalated at the positive electrode and the negative electrode.

The herein-described information described in the background technology of this disclosure is only for facilitating understanding of the background of the present disclosure and therefore may also include information that does not constitute the related art.

### SUMMARY

The present disclosure is directed to providing a tape attachment device for a secondary battery which is capable of increasing an adhesive force of tape, and a tape attachment method using the same.

The present disclosure is directed to providing a tape attachment device for a secondary battery which is capable of preventing generation of bubbles, and a tape attachment method using the same.

However, technical objects to be achieved through the present disclosure are not limited to the herein-described objects, and other objects which are not described herein will be clearly understood by those skilled in the art from the following description of the present disclosure.

In accordance with aspects of the present disclosure, there is provided a tape attachment device for a secondary battery which includes a first attachment roller disposed in a direction (substantially) parallel to a first direction and a second attachment roller disposed in a direction (substantially) parallel to a second direction intersecting the first direction, wherein the first attachment roller and the second attachment roller (are configured to) bring tape into close contact with a secondary battery while moving in a direction (substantially) parallel to a third direction intersecting the first direction and the second direction.

The secondary battery may include a case to which the tape is attached, an electrode assembly accommodated in the case, and a cap assembly provided on a first surface of the case.

The case may include a long side portion on which the first attachment roller is (configured to be) seated and rolled and a short side portion which is disposed to intersect the long side portion and on which the second attachment roller is (configured to be) seated and rolled.

A length of the short side portion in the third direction may be smaller than a length of the long side portion in the first direction.

An area of the short side portion may be smaller than an area of the long side portion.

The short side portion may be concavely deformed.

The tape may include a first portion (configured to be) attached to a second surface, which is disposed to be spaced apart from the first surface in the direction (substantially) parallel to the third direction, of the case, a second portion extending from the first portion in the direction (substantially) parallel to the second direction and (configured to be) attached to the long side portion, and a third portion extending from the first portion in the direction (substantially) parallel to the first direction and (configured to be) attached to the short side portion.

The second portion may be (configured to be) disposed between the long side portion and the first attachment roller, and the third portion may be (configured to be) disposed between the short side portion and the second attachment roller.

The tape may further include a fourth portion extending from the second portion in the direction (substantially) parallel to the first direction and overlapping (or configured to overlap) the third portion.

A length of the fourth portion in the first direction may be smaller than a length of the third portion in the first direction.

The tape attachment device may further include a third attachment roller which is disposed in the direction (substantially) parallel to the third direction and brings (or is configured to bring) the fourth portion into close contact with the third portion while moving in the direction substantially parallel to the second direction.

The third attachment roller may be (configured to be) seated and rolled on the short side portion.

The fourth portion may be (configured to be) disposed between the third portion and the third attachment roller.

A length of the second attachment roller in the second direction may be smaller than a length of the first attachment roller in the first direction.

The tape may include an insulating material.

In accordance with aspects of the present disclosure, there is provided a method of attaching tape for a secondary battery, which includes bringing, by a first attachment roller disposed in a direction (substantially) parallel to a first direction, a second portion of tape into close contact with a long side portion of a case while moving in a direction (substantially) parallel to a third direction, and bringing, by a second attachment roller disposed in a direction (substantially) parallel to a second direction, a third portion of the tape into close contact with a short side portion of the case while moving in the direction (substantially) parallel to the third direction.

The method may further include bringing, by a third attachment roller disposed in the direction (substantially) parallel to the third direction, a fourth portion of the tape into close contact with the third portion while moving in the direction (substantially) parallel to the second direction.

At least some of the above and other features of the invention are set out in the claims.

### BRIEF DESCRIPTION OF THE DRAWINGS

Since the accompanying drawings of the present specification illustrate example embodiments of the present disclosure and serve to convey the technical scope of the present disclosure with the detailed description of the present disclosure herein, the present disclosure should not be interpreted in a limited sense with reference to the content in the accompanying drawings:
FIG. 1 is a schematic perspective view illustrating a configuration of a tape attachment device for a secondary battery according to embodiments of the present disclosure;
FIG. 2 is an exploded schematic perspective view illustrating the tape attachment device for a secondary battery according to embodiments of the present disclosure;
FIG. 3 is a schematic perspective view illustrating a configuration of a secondary battery according to embodiments of the present disclosure;
FIG. 4 is an exploded schematic perspective view illustrating the configuration of the secondary battery according to embodiments of the present disclosure;
FIG. 5 is a schematic cross-sectional view illustrating the configuration of the secondary battery according to embodiments of the present disclosure;
FIG. 6 is a schematic perspective view illustrating a configuration of a tape attachment device for a secondary battery according to embodiments of the present disclosure;
FIG. 7 is an exploded schematic perspective view illustrating the configuration of the tape attachment device for a secondary battery according to embodiments of the present disclosure;
FIG. 8 is a schematic perspective view illustrating a configuration of a tape attachment device for a secondary battery according to embodiments of the present disclosure;
FIG. 9 is an exploded schematic perspective view illustrating the configuration of the tape attachment device for a secondary battery according to embodiments of the present disclosure; and
FIGS. 10 to 16 are a flowchart and schematic views illustrating a method of attaching tape for a secondary battery according to embodiments of the present disclosure.

### DETAILED DESCRIPTION

Hereinafter, example embodiments of the present disclosure will be described in detail with reference to the accompanying drawings. First, terms and words used in the present specification and claims should not be interpreted as being limited to commonly used meanings or meanings in dictionaries and should be interpreted as having meanings and concepts which are consistent with the technological scope of the present disclosure based on the principle that the inventors have appropriately defined concepts of the terms in order to describe the present disclosure in the best way. Therefore, since the embodiments described in this specification and components illustrated in the drawings are only some example embodiments and do not represent the overall technological scope of the present disclosure, it should be understood that there may be various equivalents or modifications replacing the example embodiments at the time of filing of this application.

In addition, the terms "comprise," "include," "comprising," and/or "including" used in the present specification specify the presence of stated shapes, numbers, steps, operations, members, elements, and/or groups thereof but do not preclude the presence or addition of one or more other shapes, numbers, steps, operations, members, elements, and/or groups thereof.

In addition, in order to facilitate understanding of the present disclosure, the accompanying drawings are not drawn to actual scale, and the dimensions of some components may be exaggerated. In addition, like reference numerals may be assigned to like elements in different embodiments.

The statement that two comparative objects are "the same" means that the two comparative objects are "substantially the same." Therefore, the term "substantially the same" includes a case in which there is a deviation considered as a low level in the art, for example, a deviation of 5% or less. In addition, the description "some parameters are uniform within a certain region" may mean that "some parameters are uniform from an average perspective."

Although terms such as "first," "second," or the like may be used for describing various elements, the elements are not limited by these terms. These terms are only used to distinguish one element from another element, and unless otherwise specifically described, a first element may also be a second element.

Throughout the specification, unless specifically described otherwise, each element may be singular or plural.

A case in which a first element is disposed "over (or under)" or "above (or below)" a second element may include a case in which the first element is disposed in contact with an upper (or lower) surface of the second element or a case in which a third element is interposed between the first element and the second element disposed over (or under) the first element.

When a first element is referred to as being "disposed on," connected to," or "coupled to" a second element, although the first element may be directly connected or bonded to the second element, it should be understood that a third element may be interposed therebetween, or the first and second elements may be connected, coupled, or bonded through the third element.

As used in the present specification, the term "and/or" includes any one or more and all combinations of the associated listed items. In addition, when embodiments of the present disclosure are described, the use of "may" relates to "one or more embodiments of the present disclosure." Expressions such as "one or more" and "at least one" before a list of elements modify the list of elements as a whole and do not modify the individual elements of the list.

Throughout the specification, unless otherwise specifically described, "A and/or B" means A, B, or A and B. Unless otherwise specifically described, "C to D" means more than or equal to C and less than or equal to D.

When the phrase "at least one of A, B, and C," "at least one of A, B, or C," "at least one selected from the group consisting of A, B, and C," or "at least one selected from A, B, and C" is used to indicate a list of elements A, B and C, the phrase may refer to any suitable combination thereof.

The term "use" may be considered synonymous with the term "utilize." As used in the present specification, the terms "substantially," "about," and words similar thereto are used as terms of approximation rather than terms of degree, and are intended to consider intrinsic variations in measured or calculated values recognized by those skilled in the art.

Although the terms "first," "second," "third," etc. may be used in the present specification to describe various elements, components, regions, layers, and/or sections, these elements, components, regions, layers, and/or sections should not be limited by these terms. These terms are only used to distinguish one element, component, region, layer, or cross section from another element, component, region, layer, or cross section. Accordingly, a first member, component, region, layer, or section could be named a second element, component, region, layer, or section without departing from the teachings of the example embodiments.

Spatially relative terms "beneath," "below," "lower," "above," "upper," etc., may be used to describe relationships between one component or feature and another component(s) or feature(s) illustrated in the drawings. A spatially relative location may be understood to encompass different orientations of devices, which are being used or operated, in addition to orientations illustrated in the drawings. For example, when a device in the drawing is flipped over, an element described as "under" or "below" another element is understood to be "over" or "above" the other element. Accordingly, the term "below" encompasses both "above" and "below."

Terms used in the present specification are used to describe embodiments of the present disclosure and are not intended to limit the present disclosure.

Since adjacent unit secondary batteries are essentially insulated from each other in order to form a secondary battery module, when a secondary battery is manufactured, a process of attaching an insulating tape to an outer portion of the secondary battery is performed.

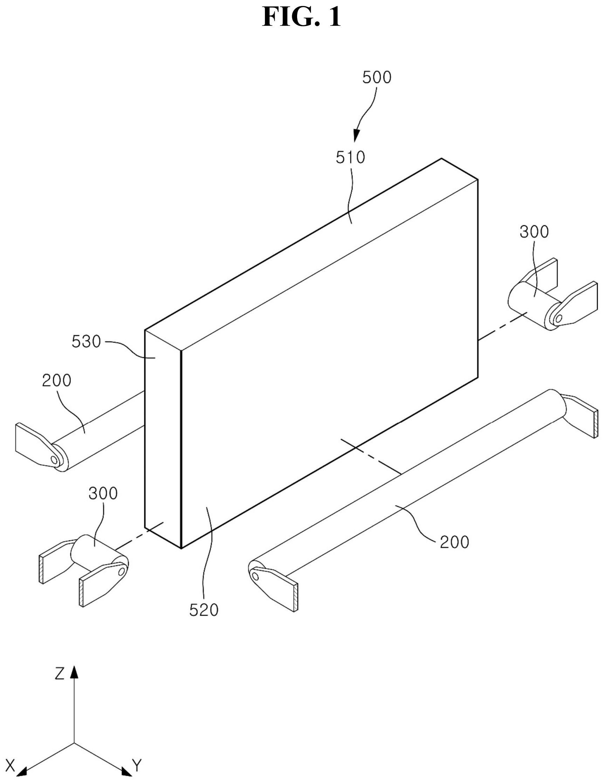

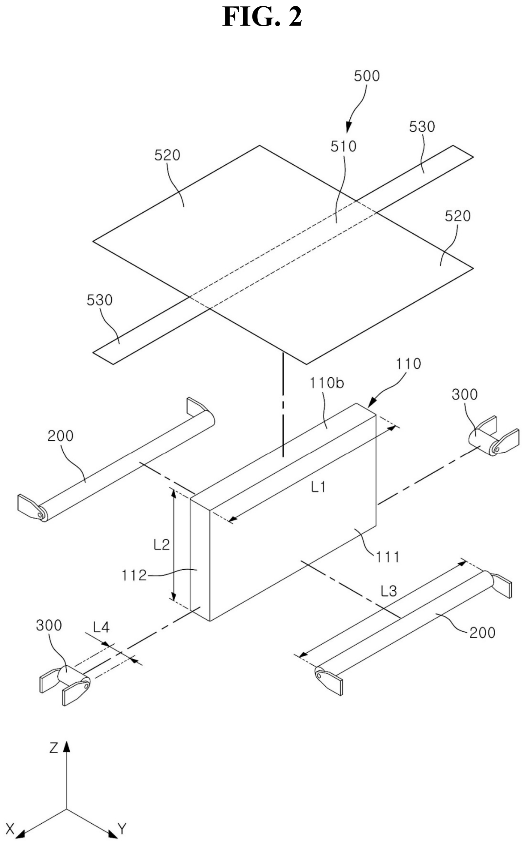

FIG. 1 is a schematic perspective view illustrating a configuration of a tape attachment device for a secondary battery according to embodiments of the present disclosure, and FIG. 2 is an exploded schematic perspective view illustrating the tape attachment device for a secondary battery according to embodiments of the present disclosure.

Referring to FIGS. 1 and 2, the tape attachment device for a secondary battery according to embodiments of the present disclosure includes a first attachment roller 200 and a second attachment roller 300.

A first direction, which will be described herein, may be an X-axis direction based on FIGS. 1 and 2, and a direction substantially parallel to the first direction may be the X-axis direction and a direction opposite to the X-axis direction. A second direction may be a Y-axis direction based on FIGS. 1 and 2, and a direction substantially parallel to the second direction may be the Y-axis direction and a direction opposite to the Y-axis direction. A third direction may be a Z-axis direction based on FIGS. 1 and 2, and a direction substantially parallel to the third direction may be the Z-axis direction and a direction opposite to the Z-axis direction.

The first attachment roller 200 may be disposed in the direction substantially parallel to the first direction. The first attachment roller 200 may be formed in a cylindrical shape having a set length. The first attachment roller 200 may extend in the direction substantially parallel to the first direction.

A central shaft of the first attachment roller 200 may be disposed in the direction substantially parallel to the first direction. The first attachment roller 200 may roll about the central shaft as a rotation axis.

The first attachment roller 200 may be disposed to face a secondary battery 100. The first attachment roller 200 may move in the direction substantially parallel to the third direction. The first attachment roller 200 may move in the direction opposite to the third direction.

The first attachment roller 200 may bring tape 500 into close contact with the secondary battery 100. An attachment surface of the tape 500 may be attached to an outer surface of the secondary battery 100 by pressing of the first attachment roller 200.

The second attachment roller 300 may be disposed in the direction substantially parallel to the second direction. The second attachment roller 300 may be formed in a cylindrical shape having a set length. The second attachment roller 300 may extend in the direction substantially parallel to the second direction.

A length L4 of the second attachment roller 300 in the second direction may be smaller than a length L3 of the first attachment roller 200 in the first direction.

A central shaft of the second attachment roller 300 may be disposed in the direction substantially parallel to the second direction. The second attachment roller 300 may roll about the central shaft as a rotation axis.

The second attachment roller 300 may be disposed to face the secondary battery 100. The second attachment roller 300 may move in the direction substantially parallel to the third direction. The second attachment roller 300 may move in the direction opposite to the third direction.

The second attachment roller 300 may bring the tape 500 into close contact with the secondary battery 100. The attachment surface of the tape 500 may be attached to the outer surface of the secondary battery 100 by pressing of the second attachment roller 300.

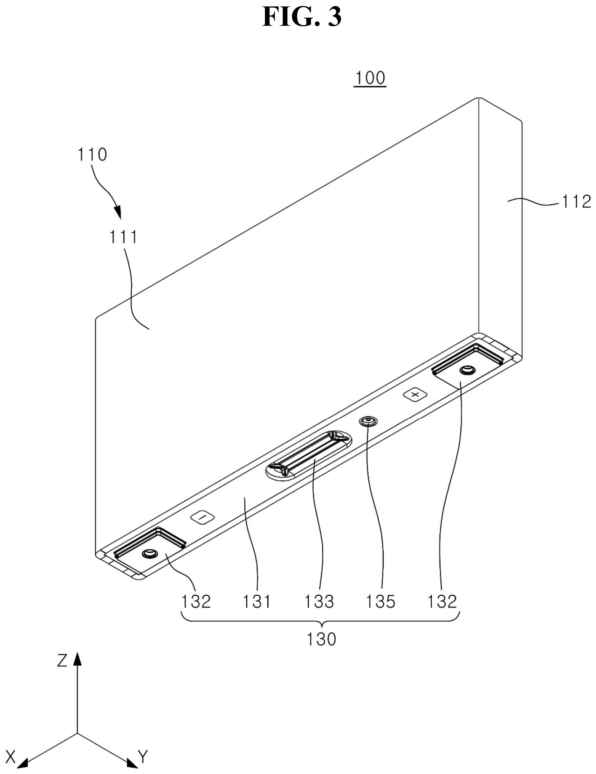

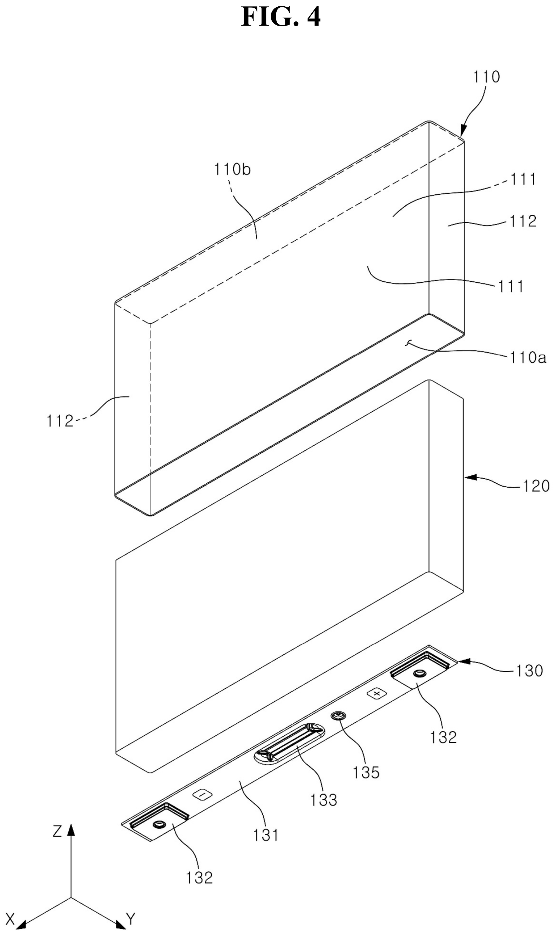

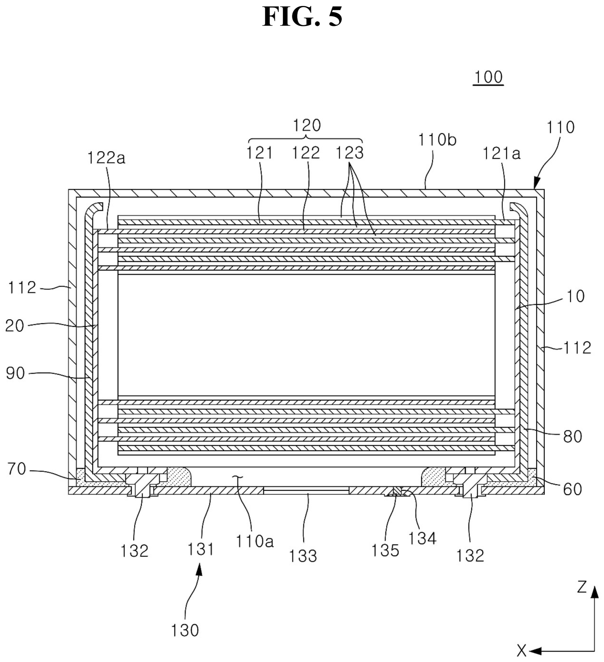

FIG. 3 is a schematic perspective view illustrating a configuration of the secondary battery according to embodiments of the present disclosure, and FIG. 4 is an exploded schematic perspective view illustrating the configuration of the secondary battery according to embodiments of the present disclosure. FIG. 5 is a schematic cross-sectional view illustrating the configuration of the secondary battery according to embodiments of the present disclosure.

Referring to FIGS. 1 to 5, the secondary battery 100 according to embodiments of the present disclosure may function as a unit structure which stores and supplies power in a battery module or battery pack. Hereinafter, an example of a prismatic secondary battery 100 will be described as the secondary battery 100. However, the present disclosure is not limited thereto, and the secondary battery 100 may be a lithium polymer battery or cylindrical battery.

The secondary battery 100 according to the present embodiment may include a case 110, an electrode assembly 120 and a cap assembly 130.

The case 110 may form an overall exterior of the secondary battery 100 and may be formed of a conductive metal such as steel coated with aluminum, an aluminum alloy, or nickel. In addition, the case 110 may provide a space for accommodating the electrode assembly 120.

The case 110 may be formed in a hollow box shape of which one side is open. The case 110 may be formed in a substantially rectangular hexahedral shape. A cross-sectional shape of the case 110 is not limited to the rectangular shape illustrated in FIG. 4, and its design may be changed to any of various shapes such as a polygonal shape, a circular shape, and an elliptical shape.

The tape 500 may be attached to the case 110. The tape 500 may be attached to an outer surface of the case 110. The case 110 may include a long side portion 111 and a short side portion 112.

The long side portion 111 may be formed in a substantially rectangular plate shape. The long side portion 111 may be provided as a pair of long side portions 111. The pair of long side portions 111 may be disposed substantially parallel to each other. The pair of long side portions 111 may be disposed to be spaced apart from each other in the direction substantially parallel to the second direction. The long side portions 111 may be called a front surface and a rear surface of the case 110.

The first attachment roller 200 may be seated and rolled on the long side portion 111. The first attachment roller 200 may move in the direction opposite to the third direction while seated on the long side portion 111.

The short side portion 112 may be disposed to intersect the long side portion 111. The short side portion 112 may be formed in a substantially rectangular plate shape. The short side portion 112 may be provided as a pair of short side portions 112. The pair of short side portions 112 may be disposed substantially parallel to each other. The pair of short side portions 112 may be disposed to be spaced apart from each other in the direction substantially parallel to the first direction. The short side portions 112 may be called both side surfaces of the case 110.

A length L2 of the short side portion 112 in the third direction may be smaller than a length L1 of the long side portion 111 in the first direction. An area of the short side portion 112 may be smaller than an area of the long side portion 111.

The second attachment roller 300 may be seated and rolled on the short side portion 112. The second attachment roller 300 may move in the direction opposite to the third direction while seated on the short side portion 112.

The electrode assembly 120 may be accommodated inside the case 110. In the electrode assembly 120, a positive electrode 121 and a negative electrode 122 may be wound with a separator 123 which is an insulator interposed therebetween.

The positive electrode 121 and the negative electrode 122 of the electrode assembly 120 may include coating portions which are regions in which current collectors each formed of a thin metal foil are coated with active materials and non-coating portions 121a and 122a which are regions in which the current collectors are not coated with the active materials.

The separator 123 which is the insulator may be interposed between the positive electrode 121 and the negative electrode 122 of the electrode assembly 120, and then the positive electrode 121 and the negative electrode 122 may be wound. However, the present disclosure is not limited thereto, and the electrode assembly 120 may be provided as a structure in which the positive electrode 121 and the negative electrode 122 formed of a plurality of sheets are alternately stacked with the separator 123 interposed therebetween.

The cap assembly 130 may be provided on a first surface 110a of the case 110. The first surface 110a may be formed in an open shape. The first surface 110a may be disposed to face downward based on FIG. 4. The first surface 110a may be called a lower surface of the case 110.

The cap assembly 130 may be disposed to face the electrode assembly 120 in the direction substantially parallel to the third direction. The cap assembly 130 may be coupled to the case 110 and cover the first surface 110a.

The cap assembly 130 may include a cap plate 131 which covers the first surface 110a of the case 110, and each of the case 110 and the cap plate 131 may be formed of a conductive material. In this case, an electrode terminal 132 electrically connected to the positive electrode 121 or the negative electrode 122 may be installed to pass through the cap plate 131 to protrude outward.

The cap plate 131 may be fixed to the first surface 110a of the case 110 by any of various coupling methods such as bolting, welding, and fitting.

In addition, an outer circumferential surface of a lower column of the electrode terminal 132 protruding outward from the cap plate 131 may be screw-processed and fixed to the cap plate 131 using a nut.

However, the present disclosure is not limited thereto, and the electrode terminal 132 may be provided as a rivet structure and coupled to the cap plate 131 using a rivet or coupled to the cap plate 131 by welding.

In addition, the cap plate 131 may be formed of a thin plate and coupled to the first surface 110a of the case 110, an electrolyte injection hole 134 in which a sealing stopper 135 may be installed may be formed in the cap plate 131, and a vent 133 in which a notch is formed may be installed in the cap plate 131.

The vent 133 may be opened or closed in conjunction with a change in internal pressure of the case 110. That is, the vent 133 may stay closed to seal the case 110 when the electrode assembly 120 operates normally.

The vent 133 may be opened as the internal pressure of the case 110 increases to a set pressure or more due to overcharging, fire, etc., and may discharge emissions such as flames and gas from an inner portion of the case 110 to the outside of the case 110.

The electrode terminal 132 may be electrically connected to the current collectors including first and second current collectors 10 and 20 (hereinafter, positive electrode and negative electrode current collectors) bonded to a positive electrode non-coating portion 121a or a negative electrode non-coating portion 122a by welding.

For example, electrode terminals 132 may be coupled to the positive electrode and negative electrode current collectors 10 and 20 by welding. However, the present disclosure is not limited thereto, and the electrode terminals 132 and the positive electrode and negative electrode current collectors 10 and 20 may be integrally formed by being coupled to each other.

In addition, an insulating member may be installed between the electrode assembly 120 and the cap plate 131. In this case, the insulating member may include first and second lower insulating members 60 and 70, and each of the first and second lower insulating members 60 and 70 may be installed between the electrode assembly 120 and the cap plate 131.

In addition, according to the present embodiment, one ends of separating members which may be installed to face one side surfaces of the electrode assembly 120 may be installed between the insulating member and the electrode terminals 132. In this case, the separating members may include first and second separating members 80 and 90.

Accordingly, one ends of the first and second separating members 80 and 90 which may be installed to face one side surfaces of the electrode assembly 120 may be installed between the first and second lower insulating members 60 and 70 and the electrode terminals 132.

Accordingly, the electrode terminals 132 welded to the positive electrode and negative electrode current collectors 10 and 20 may be coupled to the one ends of the first and second lower insulating members 60 and 70 and the first and second separating members 80 and 90.

The electrode terminal 132 may be provided on a lower surface of the secondary battery 100. The electrode terminal 132 may protrude from the lower surface of the secondary battery 100 in the direction opposite to the third direction. The electrode terminal 132 may protrude downward from the lower surface of the secondary battery 100.

The electrode terminal 132 may be provided as a pair of electrode terminals 132. The pair of electrode terminals 132 may be symmetrically disposed at both sides of the secondary battery 100. The pair of electrode terminals 132 may have different polarities.

The tape 500 may be attached to the case 110. The tape 500 may be attached to the outer surface of the case 110. An example of the tape 500 may be an insulating tape which includes an insulating material and in which an attachment surface in contact with the case 110 is provided.

The tape 500 may include a first portion 510, a second portion 520, and a third portion 530.

The first portion 510 may be attached to a second surface 110b of the case 110. The second surface 110b may be disposed to be spaced apart from the first surface 110a of the case 110 in the third direction. The second surface 110b may be called an upper surface of the case 110.

The second portion 520 may extend from the first portion 510. The second portion 520 may extend from the first portion 510 in the direction substantially parallel to the second direction. The second portion 520 may be provided as a pair of second portions 520. The pair of second portions 520 may extend from the first portion 510 in the second direction and from the first portion 510 in the direction opposite to the second direction.

The second portion 520 may be attached to the long side portion 111 of the case 110. The second portion 520 may be disposed between the long side portion 111 and the first attachment roller 200.

As the first attachment roller 200 is in contact with the second portion 520 and moves while seated and rolled on the long side portion 111 in the direction opposite to the third direction, the first attachment roller 200 may bring the second portion 520 into close contact with the long side portion 111. Accordingly, the second portion 520 of the tape 500 may be attached to the long side portion 111 of the case 110.

The third portion 530 may extend from the first portion 510. The third portion 530 may extend from the first portion 510 in the direction substantially parallel to the first direction. The third portion 530 may be provided as a pair of third portions 530. The pair of third portions 530 may extend from the first portion 510 in the first direction and from the first portion 510 in the direction opposite to the first direction.

The third portion 530 may be disposed between the pair of second portions 520. A length of the third portion 530 in the first direction may be smaller than a length of the second portion 520 in the first direction. An area of the third portion 530 may be smaller than an area of the second portion 520.

The third portion 530 may be attached to the short side portion 112 of the case 110. The third portion 530 may be disposed between the short side portion 112 and the second attachment roller 300.

As the second attachment roller 300 is in contact with the third portion 530 and moves while seated and rolled on the short side portion 112 in the direction opposite to the third direction, the second attachment roller 300 may bring the third portion 530 into close contact with the short side portion 112. Accordingly, the third portion 530 of the tape 500 may be attached to the short side portion 112 of the case 110.

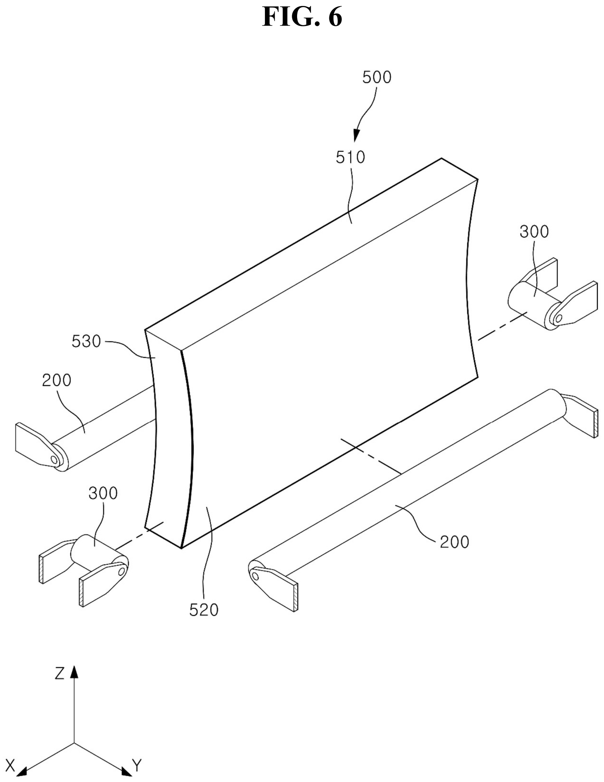

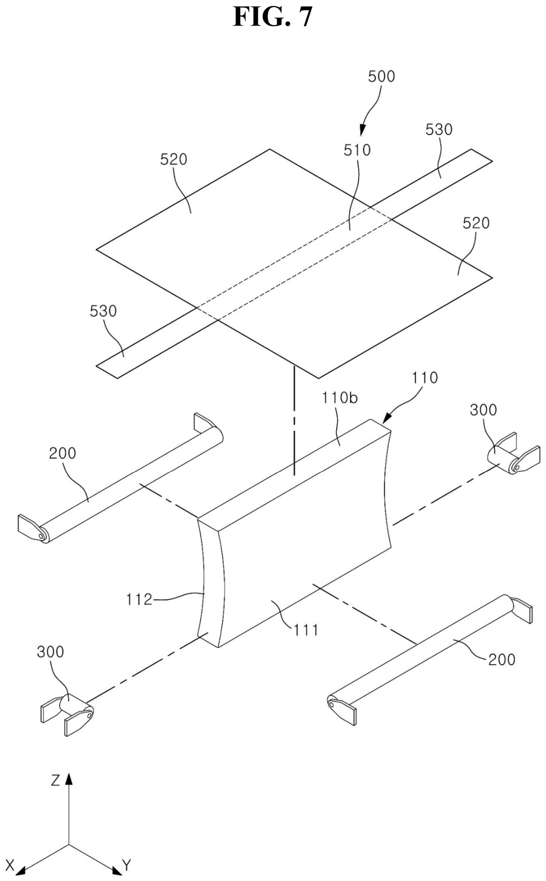

FIG. 6 is a schematic perspective view illustrating a configuration of a tape attachment device for a secondary battery according to embodiments of the present disclosure, and FIG. 7 is an exploded schematic perspective view illustrating the configuration of the tape attachment device for a secondary battery according to embodiments of the present disclosure.

Referring to FIGS. 6 and 7, the tape attachment device for a secondary battery according to embodiments of the present disclosure may include a first attachment roller 200 and a second attachment roller 300.

When the tape attachment device for a secondary battery according to embodiments of the present disclosure is described, another example of the secondary battery 100, which was not described in the description of the tape attachment device for a secondary battery according to embodiments of the present disclosure, will be described.

The description of the tape attachment device for a secondary battery according to embodiments of the present disclosure may be applied to the remaining components of the tape attachment device for a secondary battery according to embodiments of the present disclosure without change.

The secondary battery 100 according to the present embodiment may include a case 110, an electrode assembly 120, and a cap assembly 130. The case 110 may include a long side portion 111 and a short side portion 112. The short side portion 112 may be deformed concavely.

In the secondary battery 100, the short side portion 112 of the case 11 may be concavely deformed due to a swelling phenomenon during charging and discharging. The swelling phenomenon may occur during the charging and discharging which are required processes for producing the secondary battery 100, and as the long side portion 111 of the case 110 is deformed to be convex outward from the case 110, the short side portion 112 of the case 110 may be deformed to be concave toward the inside of the case 110. Accordingly, bubbles may be generated between the case 110 and the tape 500. That is, bubbles may be generated between the short side portion 112 and a third portion 530.

As the second attachment roller 300 is in contact with the third portion 530 of the tape 500 and moves while seated and rolled on the concavely deformed short side portion 112 in a direction opposite to a third direction, the second attachment roller 300 may bring the third portion 530 into close contact with the short side portion 112. Accordingly, the third portion 530 may be attached to the short side portion 112 of the case 110.

Accordingly, an adhesive force between the short side portion 112 of the case 110 and the third portion 530 of the tape 500 may be increased. Accordingly, bubbles may be prevented from being generated between the short side portion 112 and the third portion 530.

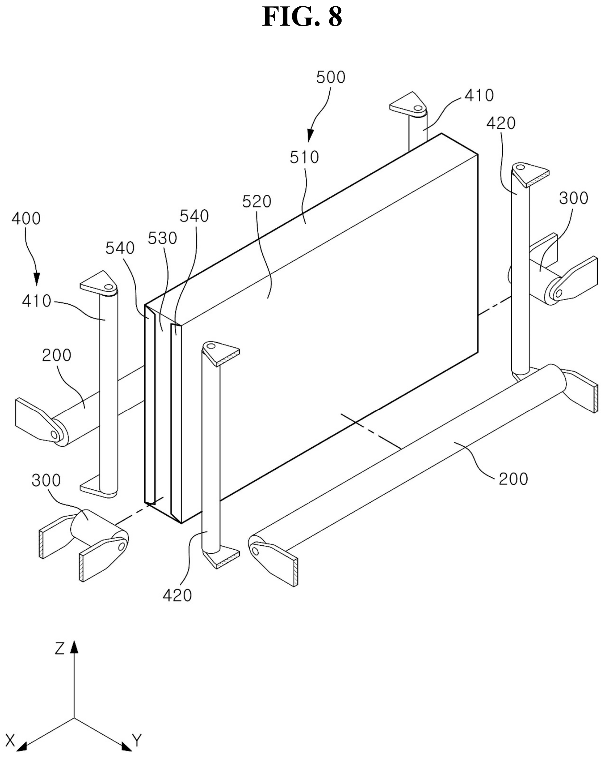

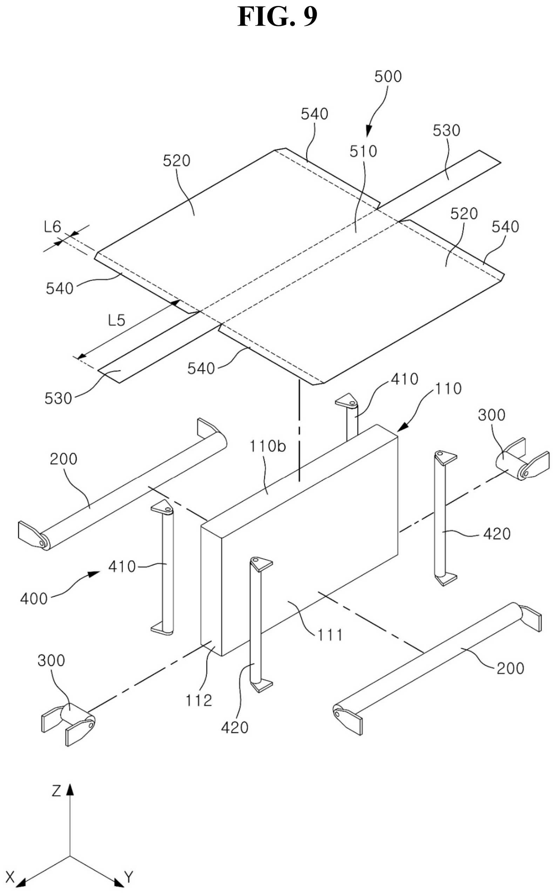

FIG. 8 is a schematic perspective view illustrating a configuration of a tape attachment device for a secondary battery according to embodiments of the present disclosure, and FIG. 9 is an exploded schematic perspective view illustrating the configuration of the tape attachment device for a secondary battery according to embodiments of the present disclosure.

Referring to FIGS. 8 and 9, the tape attachment device for a secondary battery according to embodiments of the present disclosure includes a first attachment roller 200 and a second attachment roller 300.

When the tape attachment device for a secondary battery according to embodiments of the present disclosure is described, another example of the tape 500 and a third attachment roller 400, which were not described in the description of the tape attachment device for a secondary battery according to embodiments of the present disclosure or the tape attachment device for a secondary battery according to embodiments of the present disclosure, will be described.

The description of the tape attachment device for a secondary battery according to embodiments of the present disclosure or the tape attachment device for a secondary battery according to embodiments of the present disclosure may be applied to the remaining components of the tape attachment device for a secondary battery according to embodiments of the present disclosure without change.

The tape 500 according to the present embodiment may further include a fourth portion 540. The fourth portion 540 may extend from a second portion 520 of the tape 500 in a direction substantially parallel to a first direction. The fourth portion 540 may be provided as a plurality of fourth portions 540. The plurality of fourth portions 540 may extend from the second portion 520 in the first direction and from the second portion 520 in a direction opposite to the first direction.

A length L6 of the fourth portion 540 in the first direction may be smaller than a length L5 of a third portion in the first direction. The fourth portion 540 may overlap a third portion 530. The fourth portion 540 may be attached to the third portion 530.

The tape attachment device for a secondary battery according to the present embodiment may further include a third attachment roller 400.

The third attachment roller 400 may be disposed in a direction substantially parallel to a third direction. The third attachment roller 400 may be formed in a cylindrical shape having a set length. The third attachment roller 400 may extend in the direction substantially parallel to the third direction.

A central shaft of the third attachment roller 400 may be disposed in the direction substantially parallel to the third direction. The third attachment roller 400 may roll about the central shaft as a rotation axis.

The third attachment roller 400 may be disposed to face a secondary battery 100. The third attachment roller 400 may move in a direction substantially parallel to a second direction.

The third attachment roller 400 may bring the fourth portion 540 of the tape 500 into close contact with the third portion 530 of the tape 500. An attachment surface of the fourth portion 540 may be attached to an outer surface of the third portion 530 by pressing of the third attachment roller 400.

The third attachment roller 400 according to the present embodiment may include a first roller 410 and a second roller 420.

The first roller 410 may be disposed to face the second roller 420 in the direction substantially parallel to the second direction. The first roller 410 may be disposed substantially parallel to the second roller 420. The first roller 410 may move in the second direction, and the second roller 420 may move in a direction opposite to the second direction.

The third attachment roller 400 may be seated and rolled on the short side portion 112 of the case 110. The third attachment roller 400 may be seated and moved on the short side portion 112 in the direction substantially parallel to the second direction.

The fourth portion 540 of the tape 500 may be attached to the third portion 530 of the tape 500. The fourth portion 540 may be disposed between the third portion 530 and the third attachment roller 400.

As the third attachment roller 400 is in contact with the fourth portion 540 and moves while seated and rolled on the short side portion 112 of the case 110 in the direction substantially parallel to the second direction, the third attachment roller 400 may bring the fourth portion 540 into close contact with the third portion 530. Accordingly, the fourth portion 540 of the tape 500 may be attached to the third portion 530 of the tape 500. The fourth portion 540 may cover a gap between the second portion 520 of the tape 500 and the third portion 530.

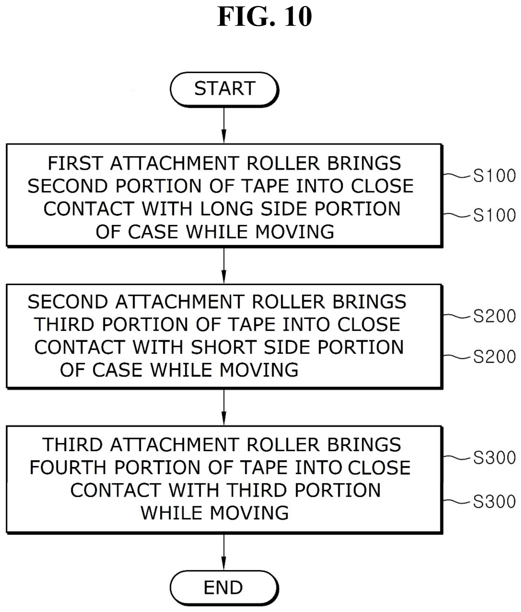

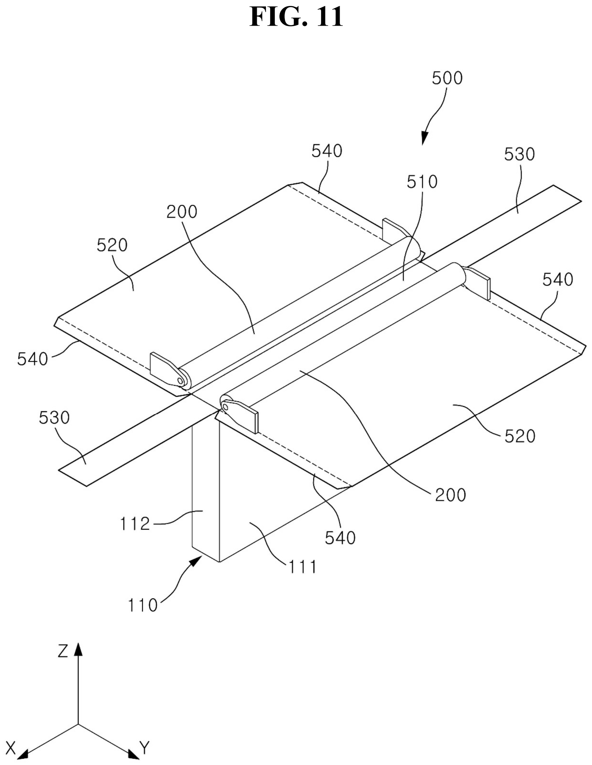

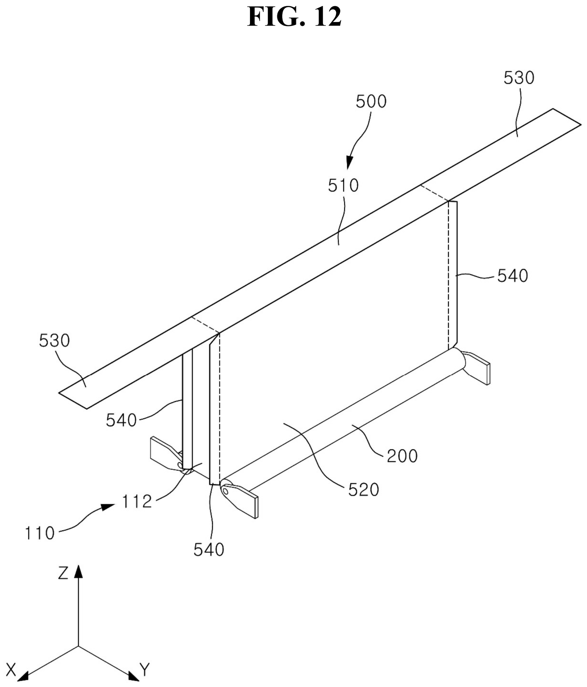

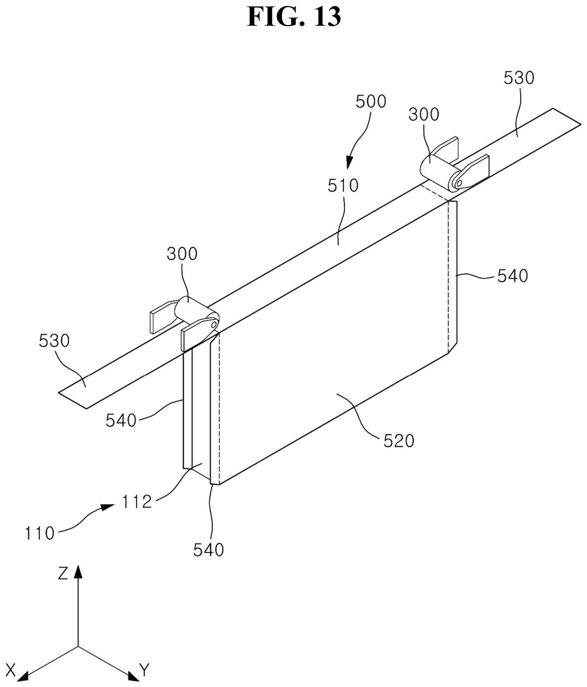

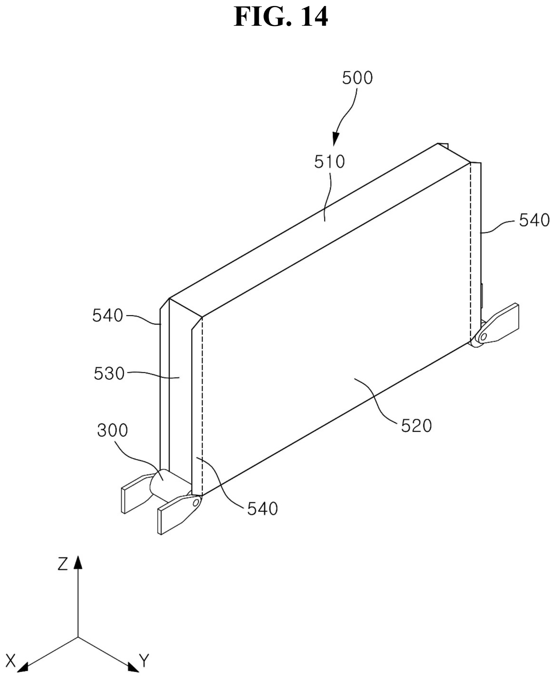

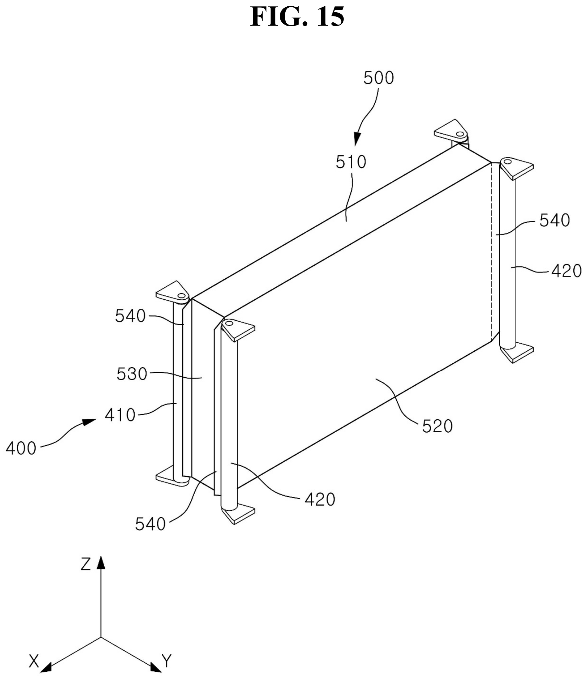

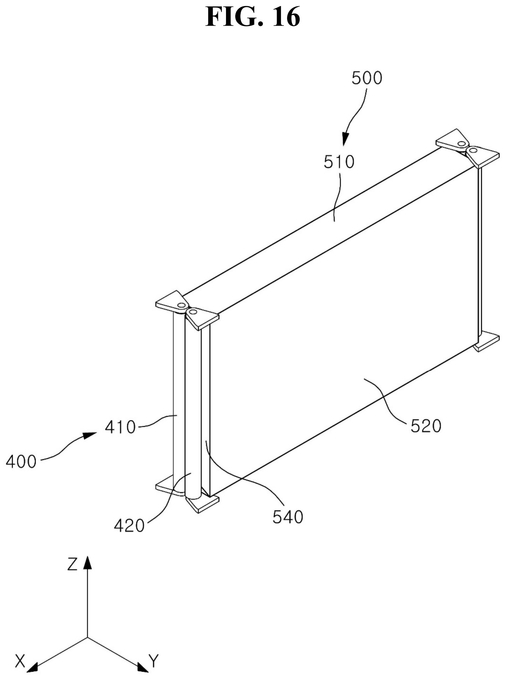

FIGS. 10 to 16 are a flowchart and schematic views illustrating a method of attaching tape for a secondary battery according to embodiments of the present disclosure.

Referring to FIGS. 10 to 12, a first attachment roller 200 disposed in a direction substantially parallel to a first direction brings a second portion 520 of the tape 500 into close contact with a long side portion 111 of a case 110 while moving in a direction substantially parallel to a third direction (S100).

A first portion 510 of the tape 500 may be seated on a second surface 110b of the case 110 and attached to the second surface 110b. The first attachment roller 200 may be seated on the first portion 510. The first portion 510 may be in close contact with the second surface 110b due to pressing of the first attachment roller 200.

The second portion 520 of the tape 500 may be attached to the long side portion 111 of the case 110. The second portion 520 may be disposed between the long side portion 111 and the first attachment roller 200.

As the first attachment roller 200 is in contact with the second portion 520 and moves while seated and rolled on the long side portion 111 in a direction opposite to the third direction, the first attachment roller 200 may bring the second portion 520 into close contact with the long side portion 111. Accordingly, the second portion 520 may be attached to the long side portion 111 of the case 110.

Referring to FIGS. 10, 13, and 14, a second attachment roller 300 disposed in a direction substantially parallel to a second direction brings a third portion 530 of the tape 500 into contact with a short side portion 112 of the case 110 while moving in the direction substantially parallel to the third direction (S200).

The third portion 530 of the tape 500 may be attached to the short side portion 112 of the case 110. The third portion 530 may be disposed between the short side portion 112 and the second attachment roller 300.

As the second attachment roller 300 is in contact with the third portion 530 and moves while seated and rolled on the short side portion 112 in the direction opposite to the third direction, the second attachment roller 300 may bring the third portion 530 into close contact with the short side portion 112. Accordingly, the third portion 530 may be attached to the short side portion 112 of the case 110.

Referring to FIGS. 10, 15, and 16, a third attachment roller 400 disposed in the direction substantially parallel to the third direction brings a fourth portion 540 of the tape 500 into close contact with the third portion 530 while moving in the direction substantially parallel to the second direction moves (S300).

The fourth portion 540 of the tape 500 may overlap the third portion 530. The fourth portion 540 may be attached to the third portion 530 of the tape 500. The fourth portion 540 may be disposed between the third portion 530 and the third attachment roller 400.

As the third attachment roller 400 is in contact with the fourth portion 540 and moves while seated and rolled on the short side portion 112 in the direction substantially parallel to the second direction, that is, a first roller 410 moves in the second direction, and a second roller 420 moves in a direction opposite to the second direction, the third attachment roller 400 may bring the fourth portion 540 into close contact with the third portion 530. Accordingly, the fourth portion 540 may be attached to the third portion 530 of the tape 500. Accordingly, the fourth portion 540 may cover a gap between the second portion 520 and the third portion 530.

According to embodiments of the present disclosure, since a first attachment roller disposed in a direction substantially parallel to a first direction and a second attachment roller disposed in a direction substantially parallel to a second direction bring tape into close contact with a secondary battery while moving in a direction substantially parallel to a third direction, an adhesive force between a case and the tape can be increased, and bubbles can be prevented from being generated between the case and the tape.

However, effects which can be achieved through the present disclosure are not limited to the herein-described effects, and other effects which are not described herein will be clearly understood by those skilled in the art from the herein description of the present disclosure.

Although the present disclosure has been described with reference to embodiments illustrated in the accompanying drawings, these are merely examples. It will be understood by those skilled in the art that various modifications and other equivalent embodiments are possible from the embodiments of the present disclosure.

Therefore, the scope of the present disclosure should be defined by the appended claims.

## Claims

1. A tape attachment device for a secondary battery, comprising:
a first attachment roller disposed in a direction substantially parallel to a first direction; and
a second attachment roller disposed in a direction substantially parallel to a second direction intersecting the first direction,
wherein the first attachment roller and the second attachment roller are configured to bring tape into close contact with a secondary battery while moving in a direction substantially parallel to a third direction intersecting the first direction and the second direction.

2. The tape attachment device of claim 1, wherein the secondary battery includes:
a case to which the tape is attached;
an electrode assembly accommodated in the case; and
a cap assembly provided on a first surface of the case.

3. The tape attachment device of claim 2, wherein the case includes:
a long side portion on which the first attachment roller is configured to be seated and rolled; and
a short side portion which is disposed to intersect the long side portion and on which the second attachment roller is configured to be seated and rolled.

4. The tape attachment device of claim 3, wherein a length of the short side portion in the third direction is smaller than a length of the long side portion in the first direction.

5. The tape attachment device of claim 4, wherein an area of the short side portion is smaller than an area of the long side portion.

6. The tape attachment device of any of claims 3 to 5, wherein the short side portion is concavely deformable.

7. The tape attachment device of any of claims 3 to 6, wherein the tape includes:
a first portion configured to be attached to a second surface, which is disposed to be spaced apart from the first surface in the direction substantially parallel to the third direction, of the case;
a second portion extending from the first portion in the direction substantially parallel to the second direction and configured to be attached to the long side portion; and
a third portion extending from the first portion in the direction substantially parallel to the first direction and configured to be attached to the short side portion.

8. The tape attachment device of claim 7, wherein:
the second portion is configured to be disposed between the long side portion and the first attachment roller; and
the third portion is configured to be disposed between the short side portion and the second attachment roller.

9. The tape attachment device of claim 7 or claim 8, wherein the tape further includes a fourth portion extending from the second portion in the direction substantially parallel to the first direction and configured to overlap the third portion.

10. The tape attachment device of claim 9, wherein a length of the fourth portion in the first direction is smaller than a length of the third portion in the first direction.

11. The tape attachment device of claim 9 or claim 10, further comprising a third attachment roller which is disposed in the direction substantially parallel to the third direction and is configured to bring the fourth portion into close contact with the third portion while moving in the direction parallel to the second direction; and, optionally, (i) the third attachment roller is configured to be seated and rolled on the short side portion; and/or (ii) the fourth portion is configured to be disposed between the third portion and the third attachment roller.

12. The tape attachment device of any preceding claim, wherein a length of the second attachment roller in the second direction is smaller than a length of the first attachment roller in the first direction.

13. The tape attachment device of any preceding claim, wherein the tape includes an insulating material.

14. A method of attaching tape for a secondary battery, the method comprising:
bringing, by a first attachment roller disposed in a direction substantially parallel to a first direction, a second portion of tape into close contact with a long side portion of a case while moving in a direction substantially parallel to a third direction; and
bringing, by a second attachment roller disposed in a direction substantially parallel to a second direction, a third portion of the tape into close contact with a short side portion of the case while moving in the direction substantially parallel to the third direction.

15. The method of claim 14, further comprising bringing, by a third attachment roller disposed in the direction substantially parallel to the third direction, a fourth portion of the tape into close contact with the third portion while moving in the direction substantially parallel to the second direction.
